# EUROPEAN PATENT APPLICATION

(11) **EP 4 697 856 A2**
(43) Date of publication of application: **18.02.2026**
(21) Application number: 25224895.0
(22) Date of filing: 03.08.2022
(51) Int. Cl.: H04W 80/02

(54) **COMMUNICATION METHOD, USER EQUIPMENT, AND BASE STATION**

(30) Priority: 04.08.2021 US 202163229155 P
(62) Divisional of application: 22853088.7
(71) Applicant: Kyocera Corporation, Kyoto-shi, Kyoto 612-8501 (JP)
(72) Inventor: FUJISHIRO, Masato, Kyoto-shi, Kyoto 612-8501 (JP)
(74) Representative: Viering, Jentschura & Partner mbB Patent- und Rechtsanwälte

(57) **Abstract**

In a first aspect, a communication method is a communication method used in a mobile communication system for supporting a multicast and broadcast service (MBS). The communication method includes: managing, by a user equipment having started reception of an MBS session from a base station, a first Packet Data Convergence Protocol (PDCP) variable updated in response to reception of a PDCP packet in the MBS session, the first PDCP variable being managed in a PDCP layer; and performing, by the user equipment, control of synchronizing the first PDCP variable with a second PDCP variable managed by the base station, in response to determining that the reception of the MBS session has been interrupted for a predetermined time.

## Description

### TECHNICAL FIELD

The present disclosure relates to a communication method, a user equipment, and a base station used in a mobile communication system.

### BACKGROUND OF INVENTION

In 3rd Generation Partnership Project (3GPP) standards, technical specifications of New Radio (NR) being radio access technology of the fifth generation (5G) have been defined. NR has features such as high speed, large capacity, high reliability, and low latency, in comparison to Long Term Evolution (LTE) being radio access technology of the fourth generation (4G). In 3GPP, there have been discussions for establishing technical specifications of multicast and broadcast services (MBS) of 5G/NR (for example, see Non-Patent Document 1).

### CITATION LIST

### NON-PATENT LITERATURE

Non-Patent Document 1: 3GPP Contribution: RP-201038, "WID revision: NR Multicast and Broadcast Services"

### SUMMARY

5G/NR multicast and broadcast services are desired to provide enhanced services compared to 4G/LTE multicast and broadcast services.

In view of this, the present disclosure provides a communication method, a user equipment, and a base station for enabling implementation of enhanced multicast and broadcast services.

In a first aspect, a communication method is used in a mobile communication system for supporting a multicast and broadcast service (MBS). The communication method includes receiving, by a user equipment from a base station, a radio resource control (RRC) Reconfiguration message comprising an MBS session identifier of an MBS session, an identifier related to an MRB to which the MBS session is mapped, and a hyper frame number (HFN) corresponding to the MBS session.

In a second aspect, a user equipment is used in a mobile communication system for supporting a multicast and broadcast service (MBS). The user equipment includes a receiver configured to receive, from a base station, a radio resource control (RRC) Reconfiguration message comprising an MBS session identifier of an MBS session, an identifier related to an MRB to which the MBS session is mapped, and a hyper frame number (HFN) corresponding to the MBS session.

In a third aspect, a base station is used in a mobile communication system for supporting a multicast and broadcast service (MBS). The base station includes a transmitter configured to transmit, to a user equipment, a radio resource control (RRC) Reconfiguration message comprising an MBS session identifier of an MBS session, an identifier related to an MRB to which the MBS session is mapped, and a hyper frame number (HFN) corresponding to the MBS session.

In a fourth aspect, a communication method is used in a mobile communication system for supporting a multicast and broadcast service (MBS). The communication method includes: managing, by a user equipment having started reception of an MBS session from a base station, a first Packet Data Convergence Protocol (PDCP) variable updated in response to reception of a PDCP packet in the MBS session, the first PDCP variable being managed in a PDCP layer; and performing, by the user equipment, control of synchronizing the first PDCP variable with a second PDCP variable managed by the base station, in response to determining that the reception of the MBS session has been interrupted for a predetermined time.

In a fifth aspect, a user equipment is used in a mobile communication system for supporting a multicast and broadcast service (MBS). The user equipment includes a controller configured to manage, upon starting reception of an MBS session from a base station, a first Packet Data Convergence Protocol (PDCP) variable updated in response to reception of a PDCP packet in the MBS session, the first PDCP variable being managed in a PDCP layer. The controller performs control of synchronizing the first PDCP variable with a second PDCP variable managed by the base station in response to determining that the reception of the MBS session has been interrupted for a predetermined time.

In a sixth aspect, a base station is used in a mobile communication system for supporting a multicast and broadcast service (MBS). The base station includes: a controller configured to manage, upon starting transmission of an MBS session, a Packet Data Convergence Protocol (PDCP) variable updated in response to transmission of a PDCP packet in the MBS session, the first PDCP variable being managed in a PDCP layer; a receiver configured to receive, from a user equipment, a request for checking the PDCP variable; and a transmitter configured to transmit the PDCP variable to the user equipment in response to the request.

### BRIEF DESCRIPTION OF THE DRAWINGS

FIG. 1 is a diagram illustrating a configuration of a mobile communication system according to an embodiment.
FIG. 2 is a diagram illustrating a configuration of a user equipment (UE) according to an embodiment.
FIG. 3 is a diagram illustrating a configuration of a gNB (base station) according to an embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating an overview of MBS traffic delivery according to an embodiment.
FIG. 7 is a diagram illustrating delivery modes according to an embodiment.
FIG. 8 is a diagram illustrating a split multicast radio bearer (MRB) according to an embodiment.
FIG. 9 is a diagram illustrating an operation scenario of the mobile communication system according to an embodiment.
FIG. 10 is a diagram illustrating an example of a PDCP variable according to an embodiment.
FIG. 11 is a diagram illustrating a PDCP data PDU according to an embodiment.
FIG. 12 is a diagram illustrating operation of identifying RCVD_COUNT being a COUNT value of the PDCP data PDU received in the UE (reception-side PDCP entity) according to an embodiment.
FIG. 13 is a diagram illustrating operation of the reception-side PDCP entity of the UE according to an embodiment.
FIG. 14 is a diagram illustrating operation of the UE according to an embodiment.
FIG. 15 is a diagram illustrating an example of operation of the mobile communication system according to an embodiment.
FIG. 16 is a diagram illustrating another example of operation of the mobile communication system according to an embodiment.
FIG. 17 is a diagram illustrating switch of PDCP fixed-type PTM/PTP based on the current agreement.

### DESCRIPTION OF EMBODIMENTS

A mobile communication system according to an embodiment is described with reference to the drawings. In the description of the drawings, the same or similar parts are denoted by the same or similar reference signs.

### Configuration of Mobile Communication System

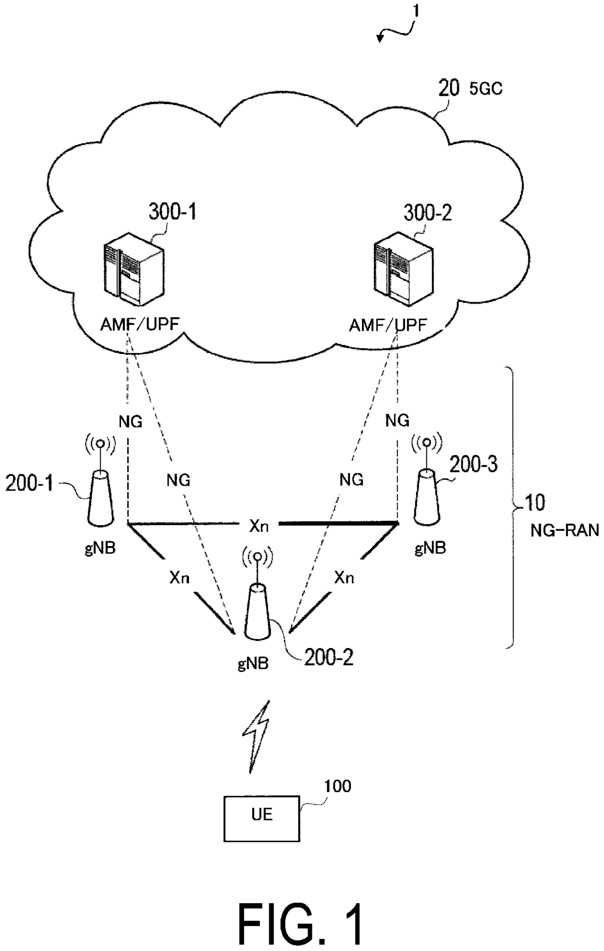

FIG. 1 is a diagram illustrating a configuration of a mobile communication system 1 according to the present embodiment. The mobile communication system 1 complies with the 5th Generation System (5GS) of the 3GPP standard. The description below takes the 5GS as an example, but Long Term Evolution (LTE) system may be at least partially applied to the mobile communication system. A sixth generation (6G) system may be at least partially applied to the mobile communication system.

The mobile communication system 1 includes a User Equipment (UE) 100, a 5G radio access network (Next Generation Radio Access Network (NG-RAN)) 10, and a 5G Core Network (5GC) 20. The NG-RAN 10 may be hereinafter simply referred to as a RAN 10. The 5GC 20 may be simply referred to as a core network (CN) 20.

The UE 100 is a mobile wireless communication apparatus. The UE 100 may be any apparatus as long as the UE 100 is used by a user. Examples of the UE 100 include a mobile phone terminal (including a smartphone) or a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter simply referred to as one "frequency").

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

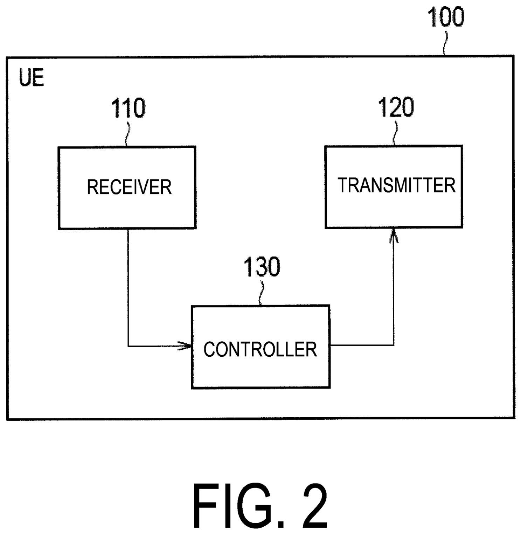

FIG. 2 is a diagram illustrating a configuration of the UE 100 (user equipment) according to the present embodiment. The UE 100 includes a receiver 110, a transmitter 120, and a controller 130. The receiver 110 and the transmitter 120 constitute a wireless communicator that performs wireless communication with the gNB 200.

The receiver 110 performs various types of reception under control of the controller 130. The receiver 110 includes an antenna and a reception device. The reception device converts a radio signal received through the antenna into a baseband signal (a reception signal) and outputs the resulting signal to the controller 130.

The transmitter 120 performs various types of transmission under control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various types of control and processes in the UE 100. Such processes include processes of respective layers to be described later. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

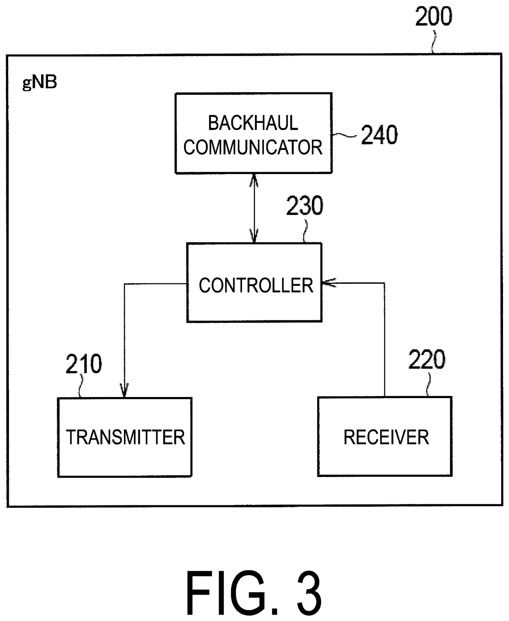

FIG. 3 is a diagram illustrating a configuration of the gNB 200 (base station) according to the present embodiment. The gNB 200 includes a transmitter 210, a receiver 220, a controller 230, and a backhaul communicator 240. The transmitter 210 and the receiver 220 constitute a wireless communicator that performs wireless communication with the UE 100. The backhaul communicator 240 constitutes a network communicator that performs communication with the CN 20.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal through the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of control and processes in the gNB 200. Such processes include processes of respective layers to be described later. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via an Xn interface between base stations. The backhaul communicator 240 is connected to the AMF/UPF 300 via a NG interface between a base station and the core network. Note that the gNB 200 may include a Central Unit (CU) and a Distributed Unit (DU) (i.e., functions are divided), and the two units may be connected via an F1 interface, which is a fronthaul interface.

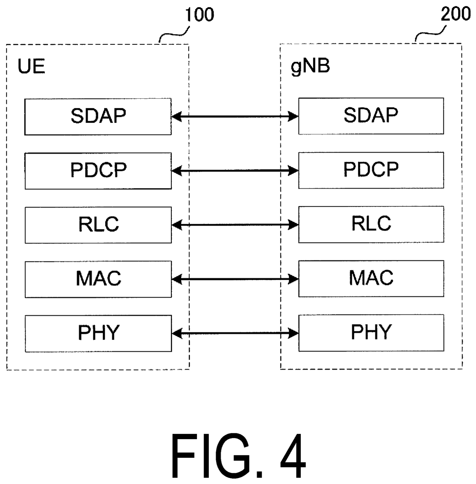

FIG. 4 is a diagram illustrating a configuration of a protocol stack of a radio interface of a user plane handling data.

A radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 blind decodes the PDCCH using a radio network temporary identifier (RNTI) and acquires successfully decoded DCI as DCI addressed to the UE 100. The DCI transmitted from the gNB 200 is appended with CRC parity bits scrambled by the RNTI.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler determines transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

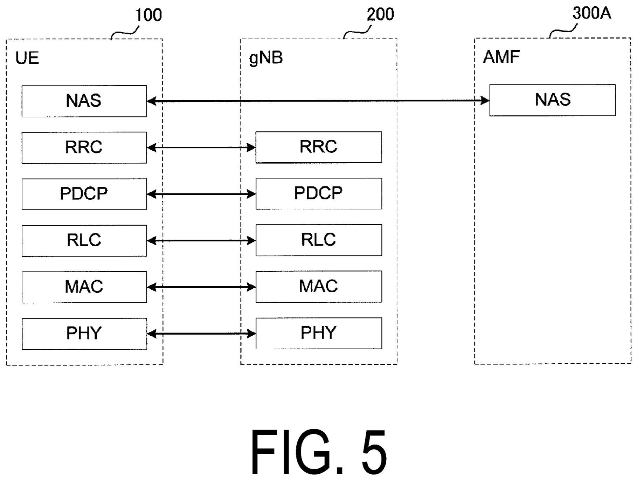

FIG. 5 is a diagram illustrating a configuration of a protocol stack of a radio interface of a control plane handling signaling (a control signal).

The protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection between the RRC of the UE 100 and the RRC of the gNB 200 (RRC connection) exists, the UE 100 is in an RRC connected state. When a connection between the RRC of the UE 100 and the RRC of the gNB 200 (RRC connection) does not exist, the UE 100 is in an RRC idle state. When the connection between the RRC of the UE 100 and the RRC of the gNB 200 is suspended, the UE 100 is in an RRC inactive state.

The NAS layer which is positioned upper than the RRC layer performs session management, mobility management, and the like. NAS signaling is transmitted between the NAS layer of the UE 100 and the NAS layer of an AMF 300A. Note that the UE 100 includes an application layer other than the protocol of the radio interface. A layer lower than the NAS layer is referred to as an AS layer.

### Overview of MBS

An overview of the MBS according to the present embodiment will be described. The MBS is a service in which the NG-RAN 10 can provide broadcast or multicast, i.e., Point To Multipoint (PTM) data transmission to the UE 100. Assumed use cases (service types) of the MBS include public safety communication, mission critical communication, Vehicle to Everything (V2X) communication, IPv4 or IPv6 multicast delivery, Internet Protocol TeleVision (IPTV), group communication, and software delivery.

A broadcast service provides a service to every UE 100 within a particular service area for an application not requiring highly reliable QoS. An MBS session used for the broadcast service is referred to as a broadcast session.

A multicast service provides a service not to every UE 100, but to a group of UEs 100 participating in the multicast service (multicast session). An MBS session used for the multicast service is referred to as a multicast session. The multicast service can provide the same content to the group of UEs 100 through a method with higher radio efficiency than the broadcast service.

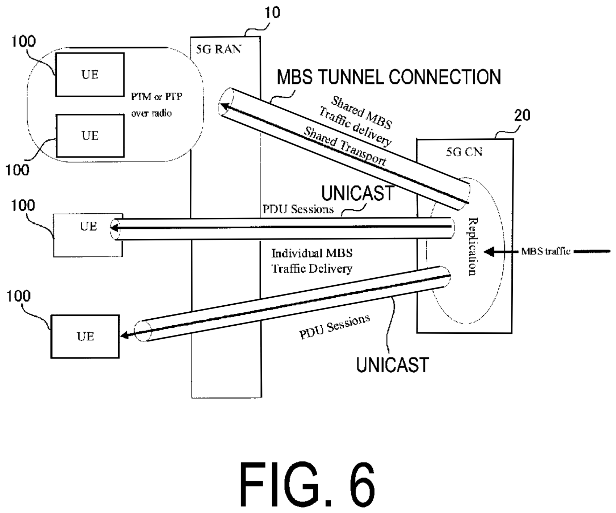

FIG. 6 is a diagram illustrating an overview of MBS traffic delivery according to the present embodiment.

MBS traffic (MBS data) is delivered from a single data source (application service provider) to a plurality of UEs. The 5G CN (5GC) 20, which is a 5G core network, receives the MBS data from the application service provider and performs Replication of the MBS data to deliver the resultant.

From the perspective of the 5GC 20, two multicast delivery methods are possible: 5GC Shared MBS Traffic delivery and 5GC Individual MBS Traffic delivery.

In the 5GC individual MBS traffic delivery method, the 5GC 20 receives a single copy of MBS data packets and delivers individual copies of these MBS data packets to the individual UEs 100 via PDU sessions of the individual UEs 100. Thus, one PDU session for each UE 100 needs to be associated with a multicast session.

In the 5GC shared MBS traffic delivery method, the 5GC 20 receives a single copy of MBS data packets and delivers the single copy of the MBS packets to a RAN node (i.e., the gNB 200). The gNB 200 receives the MBS data packets via MBS tunnel connection, and delivers those to one or more UEs 100.

From the perspective of the RAN (5G RAN) 10, two delivery methods are possible for radio transmission of the MBS data in the 5GC shared MBS traffic delivery method: a Point-to-Point (PTP) delivery method and a Point-to-Multipoint (PTM) delivery method. PTP means unicast, and PTM means multicast and broadcast.

In the PTP delivery method, the gNB 200 wirelessly delivers the individual copies of the MBS data packets to the individual UEs 100. On the other hand, in the PTM delivery method, the gNB 200 wirelessly delivers the single copy of the MBS data packets to a group of the UEs 100. The gNB 200 can dynamically determine whether to use the PTM or PTP delivery method as a method for delivering the MBS data to one UE 100.

The PTP and PTM delivery methods are mainly related to the user plane. Modes for controlling the MBS data delivery include two delivery modes: a first delivery mode and a second delivery mode.

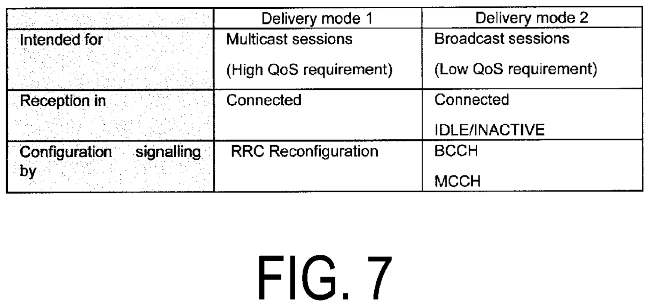

FIG. 7 is a diagram illustrating delivery modes according to the present embodiment.

The first delivery mode (Delivery mode 1 (DM1)) is a delivery mode that can be used by the UE 100 in the RRC connected state, and is a delivery mode for high QoS requirements. The first delivery mode is used for multicast sessions among MBS sessions. Note that the first delivery mode may be used for broadcast sessions. The first delivery mode may be available to the UE 100 in the RRC idle state or the RRC inactive state.

MBS reception configuration in the first delivery mode is performed through UE-dedicated signaling. For example, the MBS reception configuration in the first delivery mode is performed through an RRC Reconfiguration message (or an RRC Release message), which is an RRC message unicast from the gNB 200 to the UE 100.

The MBS reception configuration includes MBS traffic channel configuration information (hereinafter referred to as "MTCH configuration information") about configuration of an MBS traffic channel carrying MBS data. The MTCH configuration information includes MBS session information relating to an MBS session and scheduling information of an MBS traffic channel corresponding to the MBS session. The scheduling information of an MBS traffic channel may include discontinuous reception (DRX) configuration of the MBS traffic channel. The discontinuous reception configuration may include at least one parameter of a timer value (On Duration Timer) for defining an on-period (On Duration: reception period), a timer value (Inactivity Timer) for extending the on-period, a scheduling interval or a DRX cycle (Scheduling Period, DRX Cycle), an offset value (Start Offset, DRX Cycle Offset) of a start subframe for scheduling or a DRX cycle, a start delay slot value (Slot Offset) of an on-period timer, a timer value (Retransmission Timer) for defining a maximum time until retransmission, and a timer value (HARQ RTT Timer) for defining a minimum interval until DL assignment of HARQ retransmission.

Note that the MBS traffic channel is a type of logical channel and may be referred to as an MTCH. The MBS traffic channel is mapped to a downlink shared channel (DL-SCH) being a type of transport channel.

The second delivery mode (Delivery mode 2 (DM2)) is a delivery mode that can be used not only by the UE 100 in the RRC connected state, but also by the UE 100 in the RRC idle state or the RRC inactive state, and is a delivery mode for low QoS requirements. The second delivery mode is used for broadcast sessions among MBS sessions. However, the second delivery mode may also be applicable to multicast sessions.

An MBS reception configuration in the second delivery mode is performed through broadcast signaling. For example, the MBS reception configuration in the second delivery mode is performed using a logical channel transmitted from the gNB 200 to the UE 100 through broadcast, for example, a broadcast control channel (BCCH) and/or a multicast control channel (MCCH). The UE 100 can receive the BCCH and the MCCH, using a dedicated RNTI defined in technical specifications in advance, for example. The RNTI for BCCH reception may be an SI-RNTI, and the RNTI for MCCH reception may be an MCCH-RNTI.

In the second delivery mode, the UE 100 may receive the MBS data in the following three procedures. Firstly, the UE 100 receives MCCH configuration information on an SIB (MBS-SIB) transmitted from the gNB 200 on the BCCH. Secondly, the UE 100 receives the MCCH from the gNB 200, based on the MCCH configuration information. On the MCCH, MTCH configuration information is transmitted. Thirdly, the UE 100 receives the MTCH (MBS data), based on the MTCH configuration information. The MTCH configuration information and/or the MCCH configuration information may be hereinafter referred to as the MBS reception configuration.

In the first delivery mode and the second delivery mode, the UE 100 may receive the MTCH, using a group RNTI (G-RNTI) assigned from the gNB 200. The G-RNTI corresponds to an RNTI for MTCH reception. The G-RNTI may be included in the MBS reception configuration (MTCH configuration information).

The network can provide different MBS services for different MBS sessions. The MBS session is identified by at least one selected from the group consisting of a Temporary Mobile Group Identity (TMGI), a source-specific IP multicast address (which consists of a source unicast IP address, such as an application function and an application server, and an IP multicast address indicating a destination address), a session identifier, and a G-RNTI. At least one selected from the group consisting of the TMGI, the G-RNTI, the source-specific IP multicast address, and the session identifier is referred to as an MBS session identifier. The TMGI, the source-specific IP multicast address, the session identifier, and the G-RNTI are collectively referred to as MBS session information.

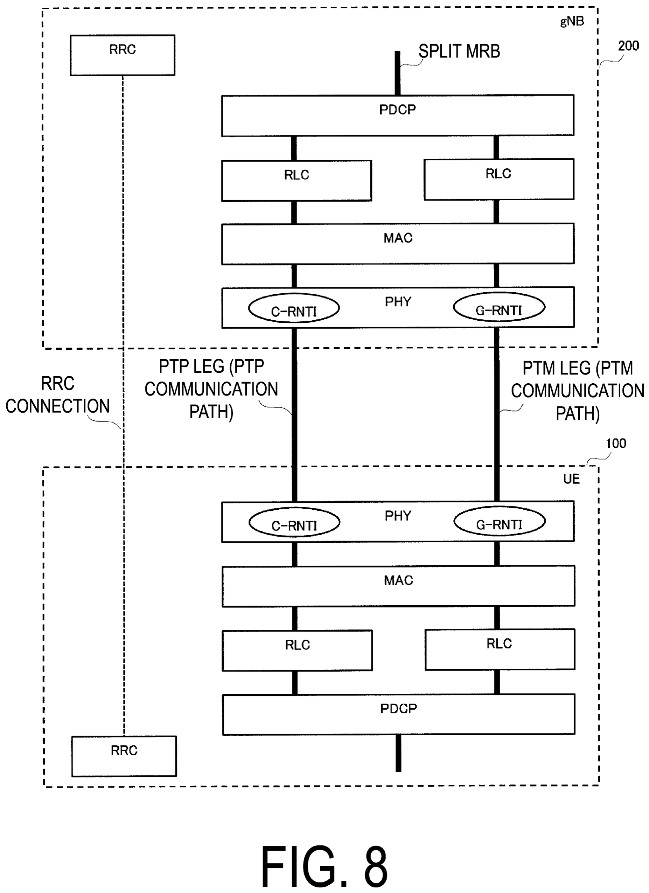

FIG. 8 is a diagram illustrating a split multicast radio bearer (MRB) according to the present embodiment. The MRB may be a type of data radio bearer (DRB). The split MRB may be used in the first delivery mode described above.

The gNB 200 may configure the MRB split into a PTP communication path and a PTM communication path for the UE 100. This allows the gNB 200 to dynamically switch the transmission of the MBS data to the UE 100 between the PTP (PTP communication path) and the PTM (PTM communication path). The gNB 200 may perform duplication transmission of the same MBS data using both the PTP (PTP communication path) and the PTM (PTM communication path) to enhance reliability. Hereinafter, the PTP communication path is referred to as a PTP leg, and the PTM communication path is referred to as a PTM leg. A functional unit corresponding to each layer is referred to as an entity.

A predetermined layer terminating the split is the MAC layer (HARQ), the RLC layer, the PDCP layer, or the SDAP layer. Although an example in which the predetermined layer terminating the split is the PDCP layer will be mainly described below, the predetermined layer may be the MAC layer (HARQ), the RLC layer, or the SDAP layer.

Each of the PDCP entity of the gNB 200 and the PDCP entity of the UE 100 splits the MRB, which is a bearer (data radio bearer) used for the MBS, into a PTP leg and a PTM leg. Note that the PDCP entity is provided for each bearer.

Each of the gNB 200 and the UE 100 includes two RLC entities provided for the respective legs, one MAC entity, and one PHY entity. The PHY entity may be provided per leg. Note that, in a Dual Connectivity in which the UE 100 communicates with two gNBs 200, the UE 100 may include two MAC entities.

The PHY entity transmits and receives data of the PTP leg using a cell RNTI (Cell Radio Network Temporary Identifier (C-RNTI)) that is allocated to the UE 100 on a one-to-one basis. The PHY entity transmits and receives data of the PTM leg, using the G-RNTI assigned to the MBS session on a one-to-one basis. The C-RNTI is different for each UE 100, but the G-RNTI is an RNTI common to a plurality of UEs 100 receiving one MBS session.

In order to perform PTM transmission of the MBS data (multicast or broadcast) from the gNB 200 to the UE 100 using a PTM leg, a split MRB needs to be configured for the UE 100 from the gNB 200 and the PTM leg needs to be activated (activation). In other words, even if a split MRB is configured for the UE 100, when a PTM leg is in a deactivation state, the gNB 200 cannot perform the PTM transmission of the MBS data using the PTM leg.

In order that the gNB 200 and the UE 100 perform PTP transmission of the MBS data (unicast) using a PTP leg, a split MRB needs to be configured for the UE 100 from the gNB 200 and the PTP leg needs to be activated. In other words, even if a split MRB is configured for the UE 100, when a PTP leg is in a deactivation state, the gNB 200 cannot perform the PTP transmission of the MBS data using the PTP leg.

When the PTM leg is in an activated state, the UE 100 monitors a PDCCH to which a G-RNTI associated with the MBS session is applied (i.e., performs blind decoding of the PDCCH, using the G-RNTI). The UE 100 may monitor the PDCCH only at a scheduling occasion of the MBS session.

When the PTM leg is in a deactivated state, the UE 100 does not monitor a PDCCH to which a G-RNTI associated with the MBS session is applied (i.e., does not perform blind decoding of the PDCCH using the G-RNTI).

When the PTP leg is in an activated state, the UE 100 monitors a PDCCH to which a C-RNTI is applied. When Discontinuous Reception (DRX) in the PTP leg is configured, the UE 100 monitors a PDCCH for a configured OnDuration period. When a cell (frequency) associated with the MBS session is specified, the UE 100 may monitor a PDCCH for the cell even when the cell is deactivated.

When the PTP leg is in a deactivated state, the UE 100 may monitor a PDCCH to which a C-RNTI is applied in preparation for normal unicast downlink transmission of other than the MBS data. Note that, when a cell (frequency) associated with an MBS session is specified, the UE 100 need not monitor a PDCCH for the MBS session.

Note that the above-described split MRB is assumed to be configured by an RRC message (for example, an RRC Reconfiguration message) transmitted by the RRC entity of the gNB 200 to the RRC entity of the UE 100.

### Operation of Mobile Communication System

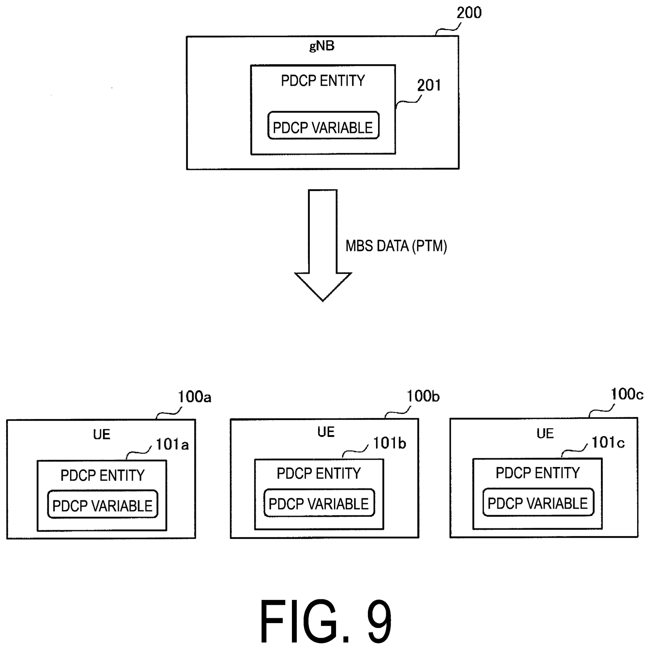

FIG. 9 is a diagram illustrating an operation scenario of the mobile communication system 1 according to the present embodiment.

The gNB 200 transmits MBS data of a certain MBS session to a plurality of UEs 100 (in the example of FIG. 9, a UE 100a to a UE 100c) through PTM (multicast or broadcast). The RRC state of each UE 100 may be any state (the RRC connected state, the RRC idle state, or the RRC inactive state). The MBS delivery mode may be the first delivery mode or the second delivery mode. The MBS delivery in the first delivery mode may use the PTM leg.

In the PDCP layer, the gNB 200 includes a PDCP entity 201 associated with the MBS session (specifically, a transmission-side PDCP entity associated with a multicast radio bearer (MRB) belonging to the MBS session). When the PDCP entity 201 starts transmission of the MBS session, the PDCP entity 201 manages a PDCP variable updated in response to transmission of a PDCP packet in the MBS session.

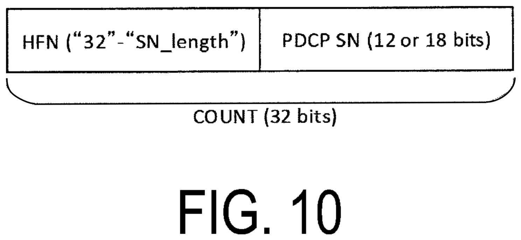

In the PDCP layer, each UE 100 includes a PDCP entity 101 associated with the MBS session (specifically, a reception-side PDCP entity associated with an MRB belonging to the MBS session). When each PDCP entity 101 (in the example of FIG. 10, a PDCP entity 101a to a PDCP entity 101b) starts transmission of the MBS session, the PDCP entity 101 manages a PDCP variable updated in response to reception of a PDCP packet in the MBS session.

As illustrated in FIG. 10, the PDCP variable may be a count value (COUNT value) including a hyper frame number (HFN) that is counted up every time a PDCP sequence number makes one round and a PDCP sequence number (PDCP SN). For example, the COUNT value has a bit length of 32 bits, the PDCP SN has a bit length (SN_length) of 12 bits or 18 bits, and the HFN has a bit length obtained by subtracting the bit length of the PDCP SN from the bit length of the COUNT value. The bit length of the PDCP SN may be configured using RRC signaling. Note that the term "PDCP variable" need not necessarily indicate the COUNT value, and may also be used as a term indicating various variables (the HFN, the PDCP SN, or the like) handled in the PDCP layer.

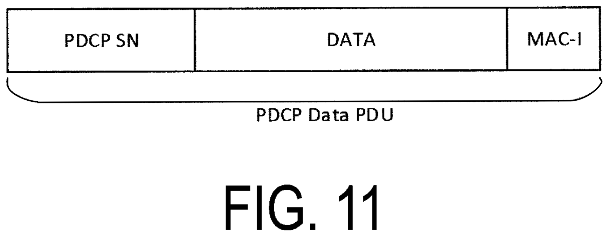

FIG. 11 is a diagram illustrating a PDCP packet, specifically, a PDCP data Protocol Data Unit (PDU), constituting MBS data. As illustrated in FIG. 11, the PDCP data PDU includes a PDCP SN, data, and a MAC-I. The PDCP SN is a sequence number sequentially assigned to the PDCP data PDU. The data corresponds to a PDCP Service Data Unit (SDU). The MAC-I corresponds to a message authentication code. The PDCP data PDU may not include the MAC-I. As described above, the PDCP data PDU includes the PDCP SN but does not include the HFN. Thus, each of the gNB 200 and the UE 100 needs to update the HFN in response to transmission and reception of the PDCP data PDU, specifically, count up the HFN every time the PDCP sequence number makes one round.

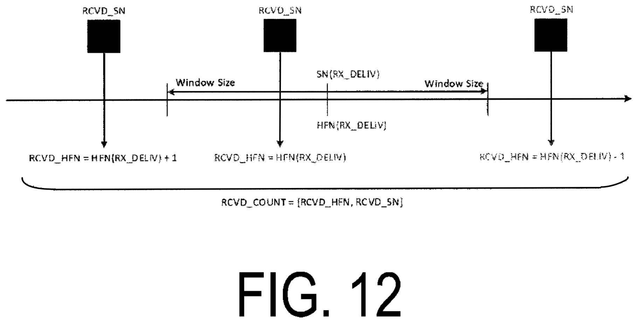

FIG. 12 is a diagram illustrating operation for identifying RCVD_COUNT being a COUNT value of the PDCP data PDU received in the UE 100 (reception-side PDCP entity 101). Here, the PDCP SN included in the received PDCP data PDU is referred to as RCVD_SN.

Firstly, when RCVD_SN < SN (RX_DELIV) - Window_Size, RCVD_HFN = HFN(RX_DELIV) + 1. Here, RX_DELIV is a variable indicating the oldest PDCP SDU that is to be received and that has not yet been provided to a higher layer. The initial value of RX_DELIV is zero. Window_Size is a constant indicating the size of a reordering window.

Secondly, when RCVD_SN ≥ SN (RX_DELIV) + Window_Size, RCVD_HFN = HFN(RX_DELIV) - 1.

Thirdly, when none of the above conditions are satisfied, RCVD_HFN = HFN(RX_DELIV).

Then, RCVD_COUNT = [RCVD_HFN, RCVD_SN] is set.

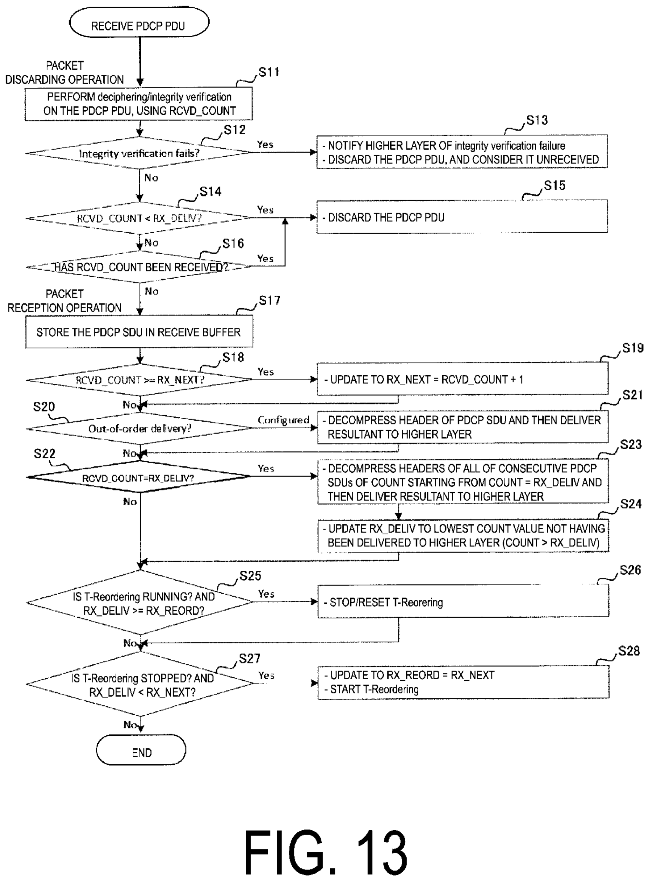

FIG. 13 is a diagram illustrating operation of the reception-side PDCP entity 101 of the UE 100.

First, when the reception-side PDCP entity 101 receives the PDCP PDU, the reception-side PDCP entity 101 performs security processing (specifically, deciphering/integrity verification) using the count value (RCVD_COUNT) on the PDCP PDU (Step S12), and when the reception-side PDCP entity 101 fails in the integrity verification (Step S12: Yes), the reception-side PDCP entity 101 notifies a higher layer of the integrity verification failure and discards the PDCP PDU (Step S13).

When the reception-side PDCP entity 101 succeeds in the integrity verification (Step S12: No), and the count value (RCVD_COUNT) is smaller than RX_DELIV (Step S14: Yes) or RCVD_COUNT has been received (Step S16: Yes), the reception-side PDCP entity 101 discards the PDCP PDU (Step S15).

Next, the reception-side PDCP entity 101 stores the undiscarded PDCP PDU in a receive buffer (Step S17), and when "RCVD_COUNT ≥ RX_NEXT" (Step S18: Yes), the reception-side PDCP entity 101 updates to RX_NEXT = RCVD_COUNT + 1 (Step S19). Here, RX_NEXT is a variable indicating a count value (RCVD_COUNT) of the PDCP SDU expected to be received next. The initial value of RX_NEXT is zero. When Out-of-order delivery is configured (Step S20: Yes), the reception-side PDCP entity 101 decompresses a header of the PDCP PDU and then delivers the resultant to a higher layer (Step S21). Specifically, when "outOfOrderDelivery" is configured in RRC, the reception-side PDCP entity 101 performs operation of S21. Out of order delivery is an operation of delivering packets to a higher layer without performing order control. Thus, as in Step S21, immediately after a packet is received and is stored in a buffer, the packet is delivered to a higher layer. Note that, when Step S20 is "No", order control is performed.

When "RCVD_COUNT = RX_DELIV" (Step S22: Yes), the reception-side PDCP entity 101 decompresses headers of all of the consecutive PDCP SDUs of COUNT starting from COUNT = RX_DELIV and then delivers the resultant to a higher layer (Step S23), and updates RX_DELIV to a first (lowest) COUNT value that has not been delivered to a higher layer (Step S24).

When T-Reordering is running and "RX_DELIV ≥ RX_REORD" (Step S25: Yes), the reception-side PDCP entity 101 stops and resets T-Reordering (Step S26). Here, T-Reordering is a timer used for detecting loss of the PDCP data PDU. RX_REORD is a variable indicating a COUNT value that follows the COUNT value associated with the PDCP data PDU for triggering T-Reordering.

When T-Reordering is stopped and "RX_DELIV < RX_REORD" (Step S27: Yes), the reception-side PDCP entity 101 updates RX_REORD = RX_NEXT and starts T-Reordering.

As described above, the reception-side PDCP entity 101 of the UE 100 updates the PDCP variable in response to reception of the PDCP packet (PDCP data PDU) from the gNB 200. Specifically, the reception-side PDCP entity 101 of the UE 100 configures the initial value of the PDCP variable to zero, and updates (increments or counts up) the PDCP variable in response to reception of the packet from the gNB 200.

Regarding the PDCP packet (PDCP data PDU), when Integrity verification fails, when RCVD_COUNT < RX_DELIV (when having already been received or the like), when RCVD_COUNT has already been received, or the like, the reception-side PDCP entity 101 of the UE 100 discards the PDCP packet.

For example, when the reception-side PDCP entity 101 of the UE 100 cannot receive a packet for a certain period or more for a reason of a poor radio state or the like and then starts to receive a packet, the reception-side PDCP entity 101 may not be able to correctly receive the packet. Specifically, when RCVD_SN >> SN (RX_DELIV), the packet may be considered as a previous packet.

Such a problem is mainly because the HFNs are out of sync between the gNB 200 and the UE 100. When the UE 100 cannot receive MBS reception (PTM reception) for a certain period, such an out-of-sync state may occur. In PTM in particular, due to reception of a plurality of UEs and absence of layer 2 feedback, there is a tendency that such a state easily occurs. As a result, the UE 100 cannot appropriately perform reception window control, packet reordering, and the like in the PDCP layer, and may not be able to appropriately continue MBS reception. The present embodiment is an embodiment for solving such a problem.

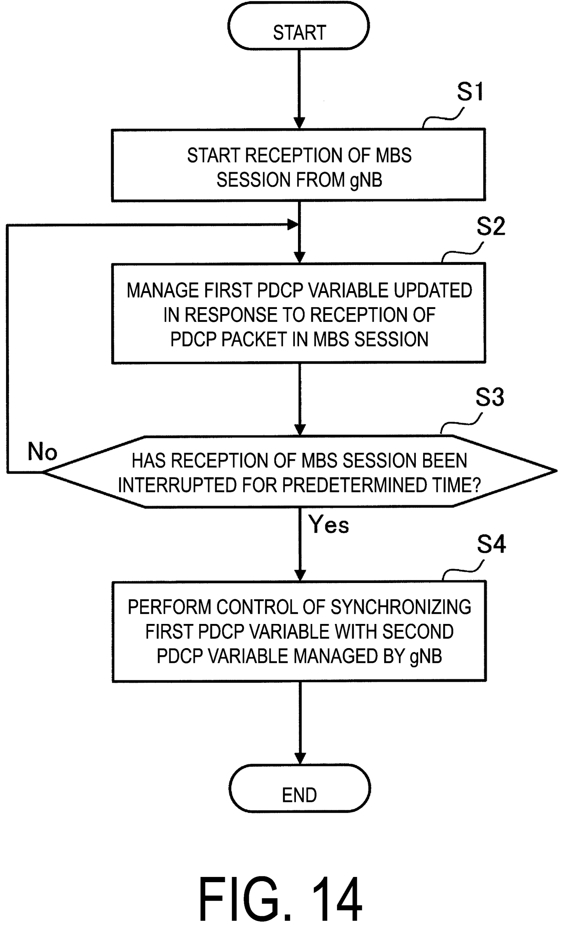

FIG. 14 is a diagram illustrating operation of the UE 100 according to the present embodiment. The UE 100 is one of the UE 100a to the UE 100c illustrated in FIG. 9.

In Step S1, the UE 100 starts reception (PTM reception) of an MBS session from the gNB 200. The MBS session may be a multicast session or a broadcast session.

In Step S2, the reception-side PDCP entity 101 of the UE 100 manages the PDCP variable (hereinafter referred to as a "first PDCP variable") updated in response to reception of a PDCP packet in the MBS session.

In Step S3, the UE 100 determines whether reception of the MBS session has been interrupted for a predetermined time. When the reception of the MBS session has not been interrupted for the predetermined time (Step S3: No), the processing returns to Step S2.

When it is determined that the reception of the MBS session has been interrupted for the predetermined time (Step S3: Yes), in Step S4, the UE 100 performs control of synchronizing the first PDCP variable with a PDCP variable (hereinafter referred to as a "second PDCP variable") managed by the gNB 200.

As described above, under a state where it can be considered that the HFNs are out of sync between the gNB 200 and the UE 100, by performing control of synchronizing the first PDCP variable managed by the UE 100 with the second PDCP variable managed by the gNB 200, the UE 100 can appropriately continue the MBS reception.

Step S4 may include a step of transmitting a request for checking the second PDCP variable to the gNB 200 and a step of receiving the second PDCP variable transmitted from the gNB 200 in response to the request. The UE 100 may apply the second PDCP variable received from the gNB 200 to the first PDCP variable. Thus, the UE 100 can synchronize the first PDCP variable managed by the UE 100 with the second PDCP variable managed by the gNB 200.

Here, the UE 100 may transmit, to the gNB 200, an RRC message including the request for checking the second PDCP variable and an identifier associated with the request. The identifier may include an MBS session identifier of the MBS session and/or an identifier (for example, an MRB identifier, an MTCH identifier, a QoS flow identifier, or the like) related to the MRB to which the MBS session is mapped. The RRC message may be an MBS Interest Indication message or a UE Assistance Information message, for example.

The UE 100 may receive, from the gNB 200, a message including the second PDCP variable and an identifier associated with the second PDCP variable. The identifier is an identifier the same as and/or similar to the identifier included in the RRC message described above. Note that the message need not include the identifier associated with the second PDCP variable. The message may be UE-dedicated signaling (for example, an RRC Reconfiguration message or a MAC control element (MAC CE)). The message may be broadcast signaling (for example, an MBS-SIB or an MCCH).

Alternatively, the reception-side PDCP entity 101 of the UE 100 may transmit a PDCP control PDU including the request for checking the second PDCP variable to the gNB 200. In response to reception of the PDCP control PDU, the transmission-side PDCP entity 201 of the gNB 200 may transmit a PDCP control PDU including the second PDCP variable to the reception-side PDCP entity 101 of the UE 100.

Step S4 may include a step of reestablishing the PDCP entity (reception-side PDCP entity 101) for reception of the MBS session. Thus, under a state where it can be considered that the HFNs are out of sync between the gNB 200 and the UE 100, the first PDCP variable managed by the UE 100 can be initialized (reset).

Step S4 may include a step of setting an initial value to the first PDCP variable. The step of setting the initial value may include a step of using the PDCP SN included in the PDCP packet (PDCP data PDU) received from the gNB 200 via the MBS session as at least a part of the initial value. Thus, the latest PDCP SN can be applied as at least a part of the first PDCP variable.

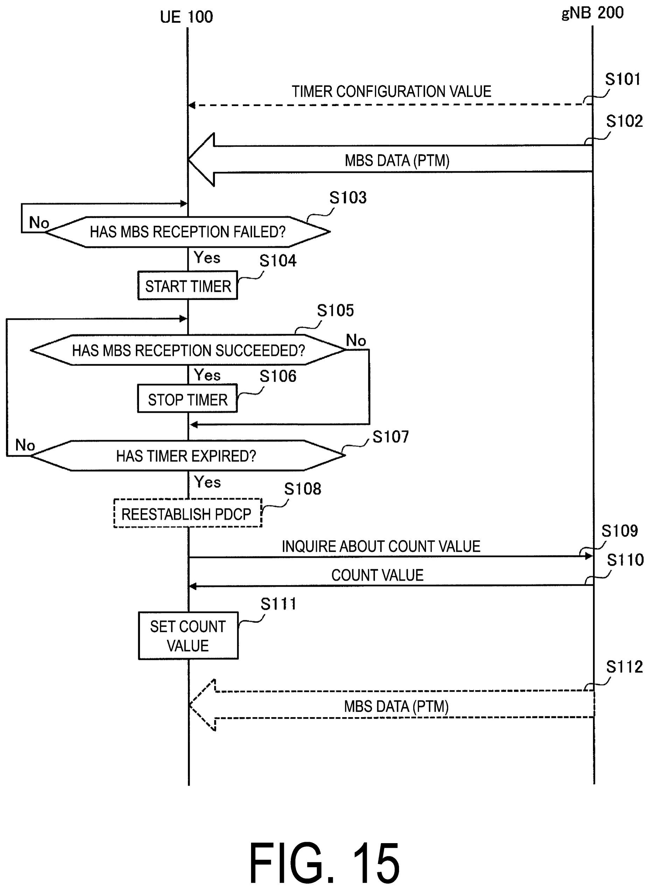

FIG. 15 is a diagram illustrating an example of operation of the mobile communication system 1 according to the present embodiment.

In Step S101, the gNB 200 may transmit a timer configuration value for measuring predetermined time to the UE 100. The UE 100 receives the timer configuration value. The timer configuration value may be notified to the UE 100, using UE-dedicated signaling (for example, an RRC Reconfiguration message). The timer configuration value may be notified to the UE 100, using broadcast signaling (for example, an MBS-SIB or an MCCH). Note that the timer configuration value may be determined depending on implementation of the UE 100. The timer configuration value may be configured for each MBS session, each QoS flow, or each G-RNTI.

In Step S102, the gNB 200 starts to transmit MBS data of a certain MBS session to a plurality of UEs 100 (in the example of FIG. 9, the UE 100a to the UE 100c) through PTM (multicast or broadcast). The UE 100 starts reception of the MBS data, and updates the PDCP variable (first PDCP variable) of the UE 100.

In Step S103, the UE 100 determines whether the UE 100 has failed in the MBS reception (PTM reception). For example, when the UE 100 fails in decoding of the MBS data in a lower layer, the UE 100 determines that the UE 100 has failed in the MBS reception. When it is determined that the UE 100 has failed in the MBS reception (Step S103: Yes), in Step S104, the UE 100 starts a timer to which the above-described timer configuration value is set.

In Step S105, the UE 100 determines whether the UE 100 has succeeded in the MBS reception (PTM reception). For example, when the UE 100 succeeds in decoding of the MBS data in a lower layer, the UE 100 determines that the UE 100 succeeds in the MBS reception. When it is determined that the UE 100 has succeeded in the MBS reception (Step S105: Yes), in Step S106, the UE 100 stops the timer. When the UE 100 does not succeed in the MBS reception (Step S105: No), the UE 100 does not stop the timer.

In Step S107, the UE 100 determines whether the timer has expired. That is, the UE 100 determines whether the MBS reception has been interrupted for the predetermined time (the time configured in the timer configuration value). When the timer has not expired (Step S107: No), the UE 100 returns the processing to Step S105. On the other hand, when the timer has expired (Step S107: Yes), the UE 100 performs at least one processing of Steps S108 to S112.

In Step S108, the UE 100 may reestablish the PDCP entity (reception-side PDCP entity 101) for MBS reception. Through such PDCP reestablishment, for the UE 100, the initial value is automatically assigned to the first PDCP variable (for example, RX_DELIV). Here, in the UE 100, the RRC layer may instruct the PDCP layer (reception-side PDCP entity 101) to perform PDCP reestablishment. The PDCP layer (reception-side PDCP entity 101) may automatically perform PDCP reestablishment. When the PDCP layer (reception-side PDCP entity 101) automatically performs PDCP reestablishment, the PDCP layer (reception-side PDCP entity 101) may notify the RRC layer of the PDCP reestablishment.

In Step S109, the UE 100 performs, to the gNB 200, a check request (inquiry) of the current COUNT value (second PDCP variable) managed by the gNB 200. The gNB 200 receives the check request (inquiry).

In Step S110, in response to reception of the check request (inquiry) from the UE 100, the gNB 200 transmits the COUNT value (second PDCP variable) managed by the gNB 200 to the UE 100. The UE 100 receives the COUNT value (second PDCP variable) managed by the gNB 200.

In Step S111, the UE 100 applies the COUNT value (second PDCP variable) received from the gNB 200 as the COUNT value managed by the UE 100. For example, the UE 100 sets the COUNT value (second PDCP variable) received from the gNB 200 to the first PDCP variable (for example, RX_DELIV) of the PDCP entity (reception-side PDCP entity 101) for MBS reception.

In Step S112, the UE 100 attempts reception of the MBS session, using the first PDCP variable set in Step S111.

As a variation of the timer described above, the following timer operation may be employed. Specifically, although the UE 100 starts the timer in Step S104, the UE 100 may start (or reset and restart) the timer when the UE 100 correctly receives the MBS data in S102. When the timer expires, in a manner the same as and/or similar to S107, the UE 100 can detect that the MBS reception has been interrupted for the predetermined time. That is, the UE 100 may start (or reset and restart) the timer every time the UE 100 correctly receives the MBS data, and when the timer expires, the UE 100 may determine that the MBS reception has been interrupted for the predetermined time.

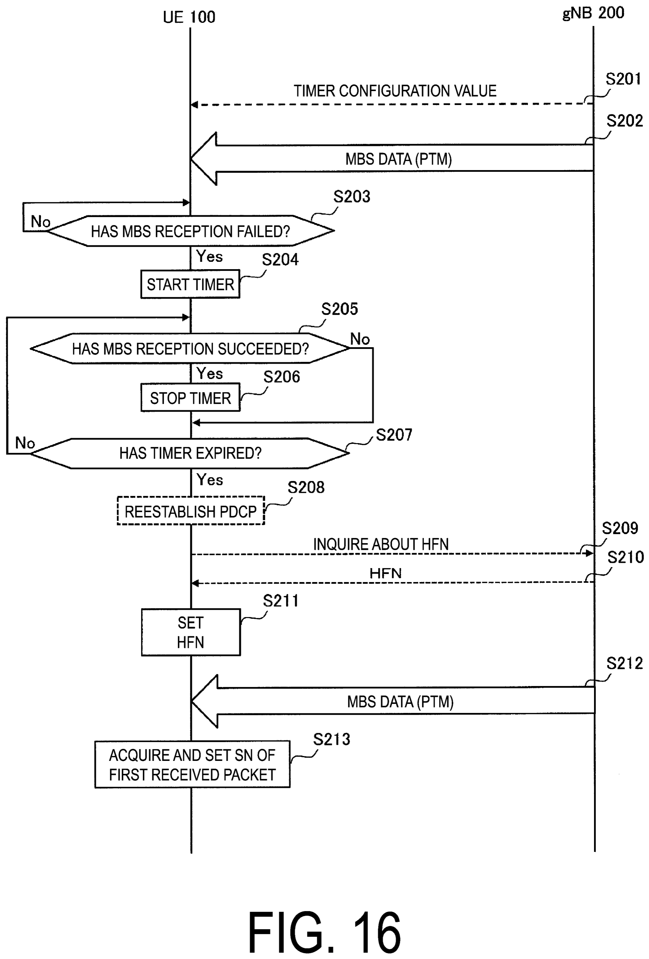

FIG. 16 is diagram illustrating another example of operation of the mobile communication system 1 according to the present embodiment. Here, differences from the operation example illustrated in FIG. 15 will be described.

The operations of Steps S201 to S208 are the same as and/or similar to the operations of Steps S101 to S108 of FIG. 15.

In Step S209, the UE 100 may perform, to the gNB 200, a check request (inquiry) of the current HFN (second PDCP variable) managed by the gNB 200. The gNB 200 receives the check request (inquiry).

In Step S210, in response to reception of the check request (inquiry) from the UE 100, the gNB 200 may transmit the HFN (second PDCP variable) managed by the gNB 200 to the UE 100. The UE 100 receives the HFN (second PDCP variable) managed by the gNB 200.

Alternatively, the UE 100 may infer the HFN (second PDCP variable) managed by the gNB 200. For example, the UE 100 may generate HFN candidates, attempt integrity verification using the HFN candidates, and determine an HFN candidate that has succeeded in the integrity verification as the HFN (second PDCP variable) managed by the gNB 200.

In Step S211, the UE 100 sets the HFN (second PDCP variable) received in Step S210 or the HFN (second PDCP variable) determined by the UE 100 to an HFN part of the COUNT value (first PDCP variable) managed by the UE 100, for example, an HFN part of RX_DELIV. After RRC reestablishment (Step S208), the UE 100 may set the HFN (second PDCP variable) received in Step S210 or the HFN (second PDCP variable) determined by the UE 100 as the initial value of the HFN part of the COUNT value (first PDCP variable) managed by the UE 100.

In Step S212, the UE 100 receives the MBS session (data) from the gNB 200.

In Step S213, the UE 100 acquires the PDCP SN of the PDCP packet (PDCP data PDU) first received from the gNB 200 in Step S212. Then, the UE 100 sets the PDCP SN acquired from the first received PDCP packet to a PDCP SN part of the COUNT value (first PDCP variable) managed by the UE 100, for example, a PDCP SN part of RX_DELIV. After RRC reestablishment (Step S208), the UE 100 may set the PDCP SN acquired from the first received PDCP packet as the initial value of the PDCP SN part of the COUNT value (first PDCP variable) managed by the UE 100.

### Other Embodiments

The embodiment described above mainly assumes a scenario in which the UE 100 cannot receive PTM for a certain period due to deterioration of a radio state. However, it is also assumed that the gNB 200 intentionally (for a reason that there is no data to be transmitted or the like) stops transmission for a certain period. Thus, as in the embodiment described above, in an example in which interruption of MBS reception for predetermined time is detected using a timer, the UE 100 determines interruption of MBS reception also when the gNB 200 intentionally (for a reason that there is no data to be transmitted or the like) interrupts MBS transmission for predetermined time, and thus the UE 100 may execute originally unnecessary processing. In view of this, when the gNB 200 intentionally stops MBS transmission, the gNB 200 may transmit a stop indication of the timer to the UE 100. When the UE 100 receives the stop indication, the UE 100 stops the timer. When the gNB 200 resumes MBS transmission, the gNB 200 may transmit a resume indication of the timer to the UE 100. When the UE 100 receives the resume indication, the UE 100 resumes the timer. When being resumed, the timer may be reset (that is, set to 0), or need not be reset (that is, may be resumed from a value at the time of being stopped). Alternatively, when the gNB 200 resumes MBS transmission, the gNB 200 may resume transmission of MBS data without transmitting the resume indication. When the UE 100 receives the MBS data, the UE 100 considers that the gNB 200 has resumed MBS transmission, and resumes the timer.

The operation flows described above can be separately and independently implemented, and also be implemented in combination of two or more of the operation flows. For example, some of the steps in one operation flow may be applied to another operation flow. Some of the steps of one operation flow may be replaced with some of the steps of another operation flow.

In the embodiments and examples described above, an example in which the base station is an NR base station (i.e., a gNB) is described; however, the base station may be an LTE base station (i.e., an eNB) or a 6G base station. The base station may be a relay node such as an Integrated Access and Backhaul (IAB) node. The base station may be a DU of the IAB node. The user equipment may be a Mobile Termination (MT) of the IAB node.

A program causing a computer to execute each of the processes performed by the UE 100 or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing processing performed by the UE 100 or the gNB 200 may be integrated, and at least a part of the UE 100 or the gNB 200 may be implemented as a semiconductor integrated circuit (chipset, system on a chip (SoC)).

The phrases "based on" and "depending on" used in the present disclosure do not mean "based only on" and "only depending on", unless specifically stated otherwise. The phrase "based on" means both "based only on" and "based at least in part on". Similarly, the phrase "depending on" means both "only depending on" and "at least partially depending on". "Obtain" or "acquire" may mean to obtain information from stored information, may mean to obtain information from information received from another node, or may mean to obtain information by generating the information. The terms "include", "comprise" and variations thereof do not mean "include only items stated" but instead mean "may include only items stated" or "may include not only the items stated but also other items". The term "or" used in the present disclosure is not intended to be "exclusive or". Further, any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a", "an", and "the" are added in the present disclosure through translation, these articles include the plural unless clearly indicated otherwise in context.

Embodiments have been described above in detail with reference to the drawings, but specific configurations are not limited to those described above, and various design variation can be made without departing from the gist of the present disclosure.

This application claims priority to US Provisional Patent Application No. 63/229155 (filed on August 4, 2021), the contents of which are incorporated herein by reference in their entirety.

### Supplementary Note

### 1. Introduction

A revised work item related to NR multicast and broadcast services (MBS) is approved in RAN #88. This has the objective to define mobility including dynamic PTM/PTP switch and service continuity as follows.
RAN basic functions of broadcast/multicast of the UE in the RRC connected state are defined. Support of dynamic change of broadcast/multicast service delivery between multicast (PTM) and unicast (PTP) provided with service continuity of a specific UE is defined.
Support of basic mobility provided with service continuity is defined.

Regarding dynamic PTM/PTP switch, in RAN2, some agreements related to this topic have already been reached. RAN2 #111-e has the following agreements.
In a case of the UE, the gNB dynamically determines which is to be used to deliver multicast data among PTM and PTP (shared delivery).
A further study is required on a case in which a layer processes reliability (generally), in-order delivery/overlapping processing, and a further study is required on how the layer functions in switch between PTM and PTP.

In RAN2 #113-e, the following agreement has been reached regarding a discussion related to L2 reliability in architecture of dynamic PTM/PTP switch.
When both of PTM and PTP are RLC UM, there is no L2 ARQ, and configuration using switch between PTM and PTP with a fixed PDCP is supported (for example, in a case of a service usually configured in RLC UM for unicast).

In RAN2 #113bis-e, regarding architecture and signaling, a further agreement has been reached as follows.

### Agreement

It should be noted that the following agreement is based only on determination of architecture thus far. A discussion on reliability has not been completed. This, in other words, is a case other than RLC UM + RLC UM. A further study is required on switch between PTM and PTP of such another case.
Dynamic PTM/PTP switch is supported with a split MRB bearer (type) including a common (single) PDCP entity.
Basically, new UE-based signaling for supporting determination of an gNB switch has not been introduced (for example, PDCP SR for high reliability is undetermined).
On an assumption of the split MRB configured with the PTM leg and the PTP leg (agreed during an online session), use of the PTP leg cannot be deactivated (that is, the UE need not constantly monitor the C-RNTI) after necessary split MRB configuration.
On an assumption of the split MRB configured with the PTM leg and the PTP leg (agreed during an online session), a further study is required on whether use of the PTM leg of the split MRB may be activated or deactivated and details thereof.

In terms of mobility, in RAN2, only the basic principles listed below are agreed. R2 has the objective to support lossless handover of MBS-MBS mobility of a service requiring this (details of scenarios are undetermined; at least PTP-PTP).
In order to support lossless handover of 5G MBS services, at least synchronization of DL PDCP SNs and continuity between the source cell and the target cell need not be secured in a network. A specific approach design for implementing this may relate to WG RAN3.
In a network, a source gNB may transfer data to a target gNB, and the target gNB delivers the transferred data. On the other hand, SN STATUS TRANSFER requires enhancement to cover the PDCP SN of MBS data. Next, the UE receives the MBS in the target cell by the target cell, in accordance with target configuration.
From the UE, a PDCP status report may also be supported.

In the supplementary note, the rest of problems of dynamic PTM/PTP switch and mobility provided with service continuity based on the agreed architecture, i.e., using the split MRB fixed to the PDCP, will be described.

### 2. Discussion

### 3. Split MRB Configuration

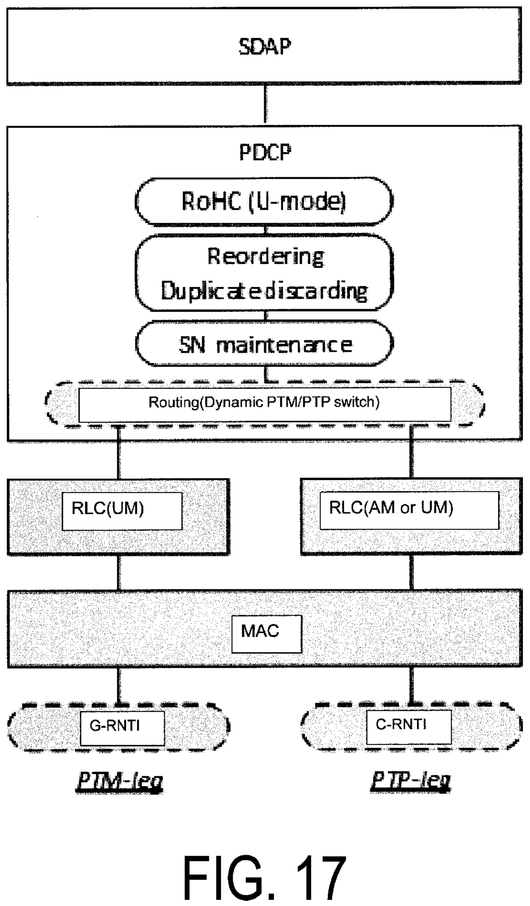

The architecture of switch of PTM/PTP fixed to the PDCP, i.e., the split MRB, can be interpreted as illustrated in FIG. 17, based on the current agreement.

In general, it can be considered that RRC reconfiguration is used to provide bearer configuration including two logical channels (the PTM leg and the PTP leg) as well as information for receiving a multicast session. RAN2 describes that "the split MRB configured with the PTM leg and the PTP leg (agreed during an online session) is assumed"; however, it is considered that provision of a configuration in which two logical channels are associated with one multicast radio bearer with RRC reconfiguration is already a common understanding as a preparation of dynamic PTM/PTP switch.

Observation 1: It is considered that provision of the configuration of associating two logical channels with one MRB with RRC reconfiguration is a common understanding, prior to dynamic PTM/PTP switch operation.

### 4. Dynamic PTM/PTP Switch Operation

### 5. Signaling

A further study is required on whether use of the split MRB and the PTM leg may be activated or deactivated and details thereof.

When the split MRB including the PTM leg/PTP leg is configured, the UE needs to monitor both of the G-RNTI of the PTM leg and the C-RNTI of the PTP leg. In LTE SC-PTM, "reception occasions of SC-PTM are independent of the unicast DRX scheme", that is, DRXs are different. The G-RNTI is received by a plurality of UEs, whereas the C-RNTI is UE-specific, and two DRXs are significantly coordinate, and thus the concept may be the basic of the NR MBS. This means that, when the UE needs to constantly monitor the G-RNTI, the UE needs to frequently wake up, and this may lead to further power consumption. On the other hand, the UE in a connected state needs to monitor the C-RNTI, that is, the C-DRX, for unicast reception; however, this is not an additional burden on the UE.

Observation 2: The UE needs to wake up for a transmission occasion (that is, the G-RNTI) of the PTM leg as in an SC-MTCH occasion of LTE SC-PTM, in addition to a transmission occasion (that is, the C-RNTI) of the same PTP leg as the C-DRX.

At the time of reception of the MRB with PTM/PTM, that is, at the time of switch operation, the following four options are present.

### Option 1: Activation/deactivation-based switch

The gNB instructs the UE to enable/disable the PTM leg, using DCI, a MAC CE, an RRC signal, or the like. This option enables more flexible handling of a case in which the MBS data is received via two legs as in the split bearer or PDCP packet redundancy, in addition to MBS data reception via either PTM or PTP. The UE can reduce power consumption from the deactivated PTM leg. In implementation of the NW, it should be noted that constant activation of two legs may be determined, and the purport of the following option 4 can be covered.

### Option 2: Switch order/command-based switch

The gNB instructs the UE to switch between the PTM leg and the PTP leg, using DCI, a MAC CE, RRC signaling, or the like. This option is the same as and/or similar to option 1 described above, and is simple, in that power is saved through deactivation of the PTM leg. This option, however, is less flexible for operation regarding the split bearer including PDCP packet redundancy. It can be considered that this option concerns only switch between the PTM leg and the PTP leg, and both of them cannot be activated.

### Option 3: RRC reconfiguration-based switch

The gNB reconfigures either PTM or PTP as the MRB for the UE with RRC reconfiguration. That is, the PTM leg and the PTP leg are not associated with one MRB. That is, it is similar to "bearer type change", and is not consistent with the split MRB architecture. This option involves L3, and thus how "dynamically" switch between PTM and PTP can be performed remains questionable.

### Option 4: Without signaling based on switch

The UE needs to constantly attempt reception from both of the PTM leg and the PTP leg when two legs are configured for the split MRB. With this option, maximum scheduling flexibility is secured from the perspective of the gNB, but the UE does not have an opportunity of power saving.

From the above, it can be said that option 1 is an option that is most appropriate in terms of flexibility of scheduling, power consumption of the UE, and consistency with the split MRB architecture. Option 4 may be regarded as a subset of option 1 when the PTM leg is constantly active. Regarding a signaling layer, the MAC CE may be simple because activation/deactivation is primarily related to the DRX operation. Therefore, RAN2 needs to agree that the PTM leg can be activated/deactivated via the MAC CE.

Proposal 1: For dynamic PTM/PTP switch, RAN2 needs to agree to introduce the MAC CE for activating/deactivating the PTM leg of the split MRB.

Regarding "bearer type change" different from dynamic switch, it is considered that the bearer type change has the following cases.
Case 1: PTM-only MRB ←→ PTP-only MRB
Case 2: Split MRB ←→ PTM-only MRB
Case 3: Split MRB ←→ PTP-only MRB

In a case of such bearer type change, it is simple to use RRC reconfiguration, that is, option 3.

Proposal 2: Regarding the PTM-only MRB, the PTP-only MRB, and the bearer type change between the split MRBs, RAN2 needs to agree on use of RRC reconfiguration.

### 6. Behavior of PDCP

### 7. Initial Value of State Variable

RAN2 agrees to support the RLC AM mode of the PTP leg of the split MRB in addition to the RLC UM mode. It is a common understanding that, because "RLC-AM does not support PTM (for MBS R17 WI)", L2 reliability is dependent only upon dynamic PTM/PTP switch. Thus, how greatly packet loss at the time of start of MBS data reception and dynamic PTM/PTP switch can be reduced is worth being studied for the sake of service continuation.

As illustrated in FIG. 17, with reuse of an existing PDCP functional view, the PDCP SN is common to the PTM leg and the PTP leg. The PTM leg is used by a plurality of UEs, and thus the PDCP SN may not be UE-specific, which affects both of the PTM leg and the PTP leg. This means that, when the UE participates in a multicast session late, the initial value of each state variable cannot be constantly set to "0", regardless of from which leg, the PTM leg or the PTP leg, the first received MBS data arrives. That is, the PDCP SN first received by the UE may be any value not assumed in the current unicast transmission. Because a state variable is configured to the initial value, PDCP reestablishment of a certain UE may affect all of the other UEs. This leads to discarding of unexpected operation in a reception window, that is an out-of-window PDCP PDU. A possibility of presence of the same problem also in handover scenarios is pointed out.

Observation 3: In a case of the UE with late participation in a multicast session and being configured with the split MRB, it is confirmed that the SN of the first received PDCP PDU is not the initial value (that is, "0"), regardless of the PTM leg or the PTP leg.

In order to solve the problem, the following options are proposed.

Option A: The gNB notifies the UE of the initial value of COUNT, or RX_NEXT and RX_DELIV.
This option is for simply changing the initial value related to the reception window based on information from the gNB so that the UE can receive first transmission of the MBS data in an existing mechanism. However, from the perspective of the PDCP layer, whether the UE can constantly correctly receive the first transmission intended by the gNB is questionable, due to delay in switch, deterioration of a radio state, outside of the RLC reconfiguration window, and the like. In this case, it is unclear how this option functions.

Option B: The gNB notifies the UE of an initial HFN, and the UE infers the initial HFN and the SN from the first received PDCP PDU.
The SN part is the option the same as and/or similar to the V2X mechanism of Rel-16, which is as follows. "The initial value of the SN part of RX_NEXT is (x + 1) modulo (2^{[sl-PDCP-SN-Size]}), and x is the SN of the first received PDCP data PDU", and "in NR sidelink communication for broadcast and groupcast, the initial value of the SN part of RX_DELIV is (x - 0.5 × 2^{[sl-PDCP-SN-Size-1]}) modulo (2^{[sl-PDCP-SN-Size]}), where x is the SN of the first received PDCP Data PDU".

Regarding the HFN part, in the Rel-16 V2X mechanism, the HFN is not used for the sake of security, and thus synchronization with a transmission device and a reception device is not necessary. That is, there is a description that "note: selection of the HFN of RX_NEXT is dependent upon implementation of the UE to make the initial value of RX_DELIV a positive value". Regarding the NR MBS, "in RAN2, before a discussion of the aspect of security in RAN2, an answer is given that completion of research related to security of the MBS in SA3 is awaited". Thus, in RAN2, the discussion of the HFN part needs to be postponed until completion of the research related to security in SA3.

From the above, a further discussion needs to be carried out based on option B. According to Rel-16 sidelink communication for broadcast and groupcast, in consideration of development of SA3 related to security of the NR MBS, RAN2 at least needs to agree that the UE configures the initial value of the state variable from the first received PDCP PDU of the MBS data.

Proposal 3: RAN2 needs to agree that the UE configures the initial value of the SN part of RX_NEXT and RX_DELIV from the first received MBS data, regardless of the PTM leg or the PTP leg. Whether the HFN part is notified from the gNB is dependent upon the progress of SA3, and a further study is required.

### 8. Simultaneous Reception and UE Assist Information

In particular, PTP (leg) is configured in RLC AM in a service requiring reliability, and lossless switch for the sake of service continuation is important, in a manner the same as and/or similar to lossless mobility. When proposal 1 is agreed on, the UE needs to support simultaneous reception from both of the PTM leg and the PTP leg. That is, two legs can be simultaneously activated in a manner the same as and/or similar to existing PDCP packet redundancy. This is for the following reason: because the PTM leg is received by a plurality of UEs, this may easily cause a non-optimal MCS for a specific UE. Thus, RAN2 needs to agree to adopt use of at least a certain period of simultaneous reception at the time of dynamic PTM/PTP switch.

Proposal 4: RAN2 needs to agree support of simultaneous reception of the UE from both of the PTM leg and the PTP leg for a certain period after dynamic PTM/PTP switch.

When proposal 3 and proposal 4 are agreed on, the gNB may not actually know which PDCP SN has been started to be correctly received by the UE via the PTM leg. In a case of switch from PTP to PTM, the gNB may not know when the PDCP PDU is to be transmitted using the PTP leg and when transmission of the PTP leg can be stopped. In order to solve the problem, it is proposed that the UE notifies the gNB of success in PTM reception, and performs transmission via the PTP leg. Note that whether the UE needs to also include PDCP SN information in the same message is unclear.

Observation 4: In a case of switch from PTP to PTM, the gNB may not know from which PDCP PDU the transmission of the PTP leg needs to be maintained, or from which PDCP PDU the UE correctly starts reception using the PTM leg.

In the same and/or similar manner, in a case of switch from PTM to PTP, the gNB may not know which PDCP SN the UE has correctly received via the PTM leg (in particular, when the radio state of the UE is poor). This means that the gNB may not know which PDCP PDU needs to be used at the time of start of the PTP leg.

Observation 5: In a case of switch from PTM to PTP, the gNB may not know from which PDCP PDU the transmission of the PTP leg needs to be started or which PDCP PDU the UE has correctly received via the PTM leg.

Thus, the following is studied: the UE notifies the gNB of SN information via the PTP leg at the time of dynamic PTM/PTP switch. When the UE reports the SN information at the time of dynamic switch between PTM and PTP, it is simple to reuse a PDCP control PDU, that is, the PDCP status report including FMC (first PDCP SDU is not found) and optionally a bitmap (indicating whether the following PDCP SDU is not found or correctly received). On the other hand, another option is that the UE reports the SN in which the UE has succeeded in first/last PDCP PDU reception via the PTM leg. Thus, a further discussion is required on details to be reported by the UE at the time of dynamic switch between PTM and PTP.

In either of the above cases (i.e., a case of switch from PTP to PTM and a case of switch from PTM to PTP), the PDCP control PDU including the PDCP SN information for the sake of service continuation needs to be triggered at the time of dynamic switch (for example, activation/deactivation of the MAC CE).

Proposal 5: RAN2 needs to study whether the UE needs to transmit the PDCP control PDU including the PDCP SN information at the time of dynamic switch for the sake of service continuation. A further study is required on whether PDCP information report can be reused.

Another point to be studied is whether lossless bearer type change the same as and/or similar to the lossless dynamic switch as in proposal 5 is required. It is considered that the bearer type change including PTP (leg) with RLC AM requires reliability the same as and/or similar to that of the dynamic switch from the perspective of service continuity and lossless mobility. Thus, RAN2 needs to study whether lossless bearer type change needs to be supported. When this is supported, the PDCP control PDU needs to be reused as the UE assist information in a manner the same as and/or similar to proposal 5.

Proposal 6: RAN2 needs to discuss whether the same solution as that for the lossless bearer type change with RRC reconfiguration, that is, the lossless dynamic switch using the PDCP control PDU as in proposal 5, can be applied.

Further embodiments are described in the following

### [Embodiment 1]

A communication method used in a mobile communication system for supporting a multicast and broadcast service (MBS), the communication method comprising:
receiving, by a user equipment from a base station, a radio resource control (RRC) Reconfiguration message comprising an MBS session identifier of an MBS session, an identifier related to an MRB to which the MBS session is mapped, and a hyper frame number (HFN) corresponding to the MBS session.

### [Embodiment 2]

The communication method according to embodiment 1, wherein
the RRC Reconfiguration message further comprises a Packet Data Convergence Protocol (PDCP) sequence number corresponding to the MBS session.

### [Embodiment 3]

The communication method according to embodiment 1, further comprising
setting, by the user equipment having received the RRC Reconfiguration message, the HFN comprised in the RRC Reconfiguration message as an HFN initial value.

### [Embodiment 4]

The communication method according to embodiment 3, further comprising
setting, by the user equipment, the PDCP sequence number comprised in a PDCP packet received from the base station via the MBS session as a PDCP sequence number initial value.

### [Embodiment 5]

The communication method according to embodiment 1, further comprising
reestablishing, by the user equipment having received the RRC Reconfiguration message, a Packet Data Convergence Protocol (PDCP) entity.

### [Embodiment 6]

A user equipment used in a mobile communication system for supporting a multicast and broadcast service (MBS), the user equipment comprising
a receiver configured to receive, from a base station, a radio resource control (RRC) Reconfiguration message comprising an MBS session identifier of an MBS session, an identifier related to an MRB to which the MBS session is mapped, and a hyper frame number (HFN) corresponding to the MBS session.

### [Embodiment 7]

A base station used in a mobile communication system for supporting a multicast and broadcast service (MBS), the base station comprising
a transmitter configured to transmit, to a user equipment, a radio resource control (RRC) Reconfiguration message comprising an MBS session identifier of an MBS session, an identifier related to an MRB to which the MBS session is mapped, and a hyper frame number (HFN) corresponding to the MBS session.

### [Embodiment 8]

A communication method used in a mobile communication system for supporting a multicast and broadcast service (MBS), the communication method comprising the steps of:
managing, by a user equipment having started reception of an MBS session from a base station, a first Packet Data Convergence Protocol (PDCP) variable updated in response to reception of a PDCP packet in the MBS session, the first PDCP variable being managed in a PDCP layer; and
performing, by the user equipment, control of synchronizing the first PDCP variable with a second PDCP variable managed by the base station, in response to determining that the reception of the MBS session has been interrupted for a predetermined time.

### [Embodiment 9]

The communication method according to embodiment 8, wherein
the performing of the control comprises the steps of:
transmitting, to the base station, a request for checking the second PDCP variable; and
receiving the second PDCP variable transmitted from the base station in response to the request.

### [Embodiment 10]

The communication method according to embodiment 9, wherein
the transmitting of the request comprises transmitting, to the base station, an RRC message comprising the request and an identifier associated with the request, and
the identifier comprises an MBS session identifier of the MBS session and/or an identifier related to a multicast radio bearer (MRB) to which the MBS session is mapped.

### [Embodiment 11]

The communication method according to embodiment 9, wherein
the transmitting of the request comprises transmitting, to the base station, a PDCP control PDU comprising the request.

### [Embodiment 12]

The communication method according to embodiment 9, wherein
the performing of the control further comprises applying the second PDCP variable received from the base station to the first PDCP variable.

### [Embodiment 13]

The communication method according to embodiment 8, wherein
the performing of the control comprises reestablishing a PDCP entity for reception of the MBS session.

### [Embodiment 14]

The communication method according to embodiment 8, wherein
each of the first PDCP variable and the second PDCP variable is a count value comprising a hyper frame number (HFN) counted up every time a PDCP sequence number makes one round and the PDCP sequence number.

### [Embodiment 15]

The communication method according to embodiment 8, wherein
each of the first PDCP variable and the second PDCP variable is a hyper frame number (HFN) counted up every time a PDCP sequence number makes one round.

### [Embodiment 16]

The communication method according to embodiment 8, wherein
the performing of the control comprises setting an initial value to the first PDCP variable, and
the setting of the initial value comprises using a PDCP sequence number comprised in the PDCP packet received from the base station via the MBS session as at least a part of the initial value.

### [Embodiment 17]

The communication method according to embodiment 8, further comprising
receiving, by the user equipment from the base station, a timer configuration value for measuring the predetermined time.

### REFERENCE SIGNS

1: Mobile communication system
10: RAN
20: CN
100: UE
110: Receiver
120: Transmitter
130: Controller
200: gNB
210: Transmitter
220: Receiver
230: Controller
240: Backhaul communicator

## Claims

1. A communication method used in a mobile communication system for supporting a multicast and broadcast service, MBS, the communication method comprising the steps of:
managing, by a user equipment having started reception of an MBS session from a radio access network node, a Packet Data Convergence Protocol, PDCP, variable updated in response to reception of a PDCP packet in the MBS session, the PDCP variable being managed in a PDCP layer; and
performing, by the user equipment, PDCP entity reestablishment for reception of the MBS session, in response to determining that the reception of the MBS session has been interrupted for a predetermined time.

2. The communication method according to claim 1, wherein
the PDCP variable is a count value comprising a hyper frame number, HFN, counted up every time a PDCP sequence number makes one round and the PDCP sequence number.

3. The communication method according to claim 1, wherein
the PDCP variable is a hyper frame number, HFN, counted up every time a PDCP sequence number makes one round.

4. A user equipment used in a mobile communication system for supporting a multicast and broadcast service, MBS, the user equipment comprising:
a receiver configured to receive, from a radio access network node, an MBS session; and
a controller configured to:
manage, a Packet Data Convergence Protocol, PDCP, variable updated in response to reception of a PDCP packet in the MBS session, the PDCP variable being managed in a PDCP layer; and
perform, PDCP entity reestablishment for reception of the MBS session, in response to determining that the reception of the MBS session has been interrupted for a predetermined time.

5. A mobile communication system comprising:
the user equipment according to claim 4; and a radio access network node.

6. A chipset comprising means for carrying out the communication method of claim 1.

7. A computer program comprising instructions that, when the program is executed by a user equipment, cause the user equipment to carry out the communication method of claim 1.
